# FASCICULE DE BREVET EUROPEEN

(11) **EP 0 313 439 B1**
(45) Date de publication et mention de la délivrance du brevet: **14.12.1994**
(21) Numéro de dépôt: 88402590.9
(22) Date de dépôt: 13.10.1988
(51) Int. Cl.: H01G 4/38, H01G 1/13

(54) **Dispositif de stockage d'énergie électrique à très haute tension**
Bauelement zum Speichern von elektrischer Energie bei sehr hoher Spannung
Storage device for very high voltage electrical energy

(30) Priorité: 19.10.1987 FR 8714374
(43) Date de publication de la demande: 26.04.1989
(73) Titulaire: AEROSPATIALE Société Nationale Industrielle, 75781 Paris Cédex 16 (FR)
(72) Inventeur: Lherm, André, F-33160 Le Haillan (FR); Raveu, Bernard, F-33160 Saint-Medard-En-Jalles (FR); Nicolas, Alain, F-01600 Reyrieux (FR)
(74) Mandataire: Bonnetat, Christian

(56) Documents cités:
- EP-A- 0 162 766
- EP-A- 0 201 383
- FR-A- 526 650
- FR-A- 1 570 953
- FR-E- 28 727

## Description

### Dispositif de stockage d'énergie électrique à très haute tension

La présente invention concerne un dispositif de stockage d'énergie électrique à très haute tension, particulièrement, quoique non exclusivement, approprié à être utilisé dans un générateur de Marx.

Cette invention résulte de la collaboration entre le Département d'Electrotechnique de l'Ecole Centrale de Lyon (Unité associée au CNRS n° 829) et le Laboratoire d'Essais Electromagnétiques de l'Etablissement d'Aquitaine de la Déposante.

On sait qu'un générateur de Marx est constitué par plusieurs étages de condensateur qui sont chargés en parallèle et déchargés en série. Chaque étage de condensateur peut être chargé sous des tensions supérieures à plusieurs centaines de kilovolts, de sorte que la tension et l'énergie disponibles à la sortie dudit générateur peuvent respectivement atteindre quelques mégavolts et quelques dizaines de kilojoules.

Par exemple, dans le document JAPANESE JOURNAL OF APPLIED PHYSICS, Vol.20 (1981) Dec.,No.12, Yusuke KUBOTA, Jun-ichi KODAIRA et Akira MIYAHARA décrivent un générateur de Marx, dans lequel chaque étage de condensateur se présente sous la forme d'une couronne, lesdites couronnes étant disposées parallèlement l'une à la suite de l'autre, coaxialement à un axe commun.

Pour sa jonction aux éclateurs qui se trouvent au voisinage dudit axe, chaque étage de condensateur peut être pourvu, à chacune de ses extrémités, d'au moins une électrode, ces électrodes étant radiales par rapport à la couronne correspondante et constituées de bandes métalliques minces (clinquant), dont les plans sont au moins sensiblement perpendiculaires audit axe commun et parallèles aux faces desdites couronnes. En fait, afin de réduire au maximum l'inductance totale de chaque étage, chacune des extrémités d'un étage de condensateur est reliée à un éclateur par une pluralité d'électrodes radiales, réparties autour dudit axe commun. De plus, chaque étage de condensateur est, avec ses électrodes, enrobé dans une résine diélectrique.

Bien entendu, afin de réduire le volume du générateur, chaque étage est réalisé de façon aussi compacte que possible.

Du fait de cette compacité recherchée et de la pluralité des électrodes associées à chaque étage, il existe donc dans les dispositifs de stockage d'énergie de ce type de nombreux points proches les uns des autres et portés à des potentiels élevés et opposés. Les risques de claquage sont donc importants.

Par ailleurs, du fait de leur structure, les électrodes ont une faible rigidité mécanique, de sorte qu'elles se déforment au moment du moulage de la résine diélectrique d'enrobement et qu'il est pratiquement impossible de respecter, en tout point d'une électrode, la distance de sécurité devant la séparer de points à potentiels élevés opposés. Les risques de claquage sont donc encore accrus.

La présente invention a pour objet de remédier à ces inconvénients.

A cette fin, selon l'invention, le dispositif de stockage d'énergie électrique à très haute tension est conforme à la revendication 1.

Ainsi, les risques de claquage entre lesdites électrodes longues et les points du condensateur à potentiels élevés opposés sont réduits. De plus, lesdits bords longitudinaux arrondis procurent auxdites électrodes une rigidification s'opposant à leur déformation, lors du moulage de l'enrobage.

La particularité qu'au moins la partie desdites électrodes longues disposée au voisinage de la périphérie interne du condensateur soit pourvue de tels bords longitudinaux arrondis est d'autant plus importante que le plus souvent, à des fins de compacité, lesdites bornes centrales sont disposées au moins approximativement dans le plan des faces d'extrémité dudit condensateur, de sorte que lesdites électrodes longues comportent un coude au voisinage de ladite périphérie interne, pour les rapprocher dudit condensateur.

Dans les dispositifs de stockage du type décrit ci-dessus, il est prévu au moins une autre électrode, plus courte, reliant la périphérie interne dudit condensateur à l'autre desdites bornes. Notamment à des fins de rigidité, il est préférable que chacune desdites électrodes (aussi bien longue que courte) soit pourvue de tels bords longitudinaux arrondis sur la plus grande partie de sa longueur.

Lesdits bords longitudinaux arrondis peuvent être obtenus par recourbement des portions longitudinales desdites électrodes. Dans ce cas, il est préférable, afin d'éliminer tout risque de claquage entre les électrodes et le condensateur, que ledit recourbement soit cylindrique et s'étende sur une amplitude angulaire d'au moins 180°, et de préférence de 225°.

Dans un mode particulier de réalisation, dans lequel les électrodes sont réalisées dans une bande métallique de 0,4 à 0,5 mm d'épaisseur et destinées à être portée à un potentiel de l'ordre de 50 KV, le rayon de recourbement est avantageusement de l'ordre de 2,5 mm.

Dans une variante de réalisation, lesdits bords longitudinaux arrondis sont formés par des tiges rondes ou tubulaires rapportées latéralement auxdites électrodes. Dans ce cas, ladite bande métallique mince peut être diamétrale par rapport auxdites tiges, ou bien excentrée par rapport au plan diamétral desdites tiges.

De plus, lesdites électrodes peuvent être constituées de deux bandes métalliques minces parallèles, solidarisées par l'intermédiaire desdites tiges.

De préférence, la ou les bandes métalliques minces et les tiges sont façonnées séparément à la forme désirée pour les électrodes, puis assemblées après mise en forme, par exemple par soudure.

Il est avantageux que lesdites électrodes comportent, à chacune de ces extrémités, un prolongement sans bords longitudinaux arrondis, en vue de leur connexion, d'une part, à l'une desdites bornes du condensateur et, d'autre part, à l'une des périphéries interne ou externe dudit condensateur.

Les figures du dessin annexé feront bien comprendre comment l'invention peut être réalisée. Sur ces figures, des références identiques désignent des éléments semblables.

La figure 1 montre, en coupe longitudinale schématique, un générateur de Marx.

La figure 2 est une coupe diamétrale, à plus grande échelle, illustrant partiellement la structure d'un étage de condensateur et sa liaison aux étages voisins.

La figure 3 est une vue de face d'un condensateur d'un tel étage, montrant la répartition des électrodes longues.

La figure 4 illustre schématiquement les lignes de champ électrique au moment de la charge desdits étages.

Les figures 5a à 5g montrent, en section, plusieurs modes de réalisation des électrodes conformes à l'invention.

Les figures 6,7 et 8 montrent, respectivement en vue de face, de dessus et en demi-coupe selon la ligne VIII-VIII de la figure 6, une électrode longue pour le générateur de Marx des figures 1 à 3.

Les figures 9 et 10 montrent, respectivement en vue de dessus et de bout, une électrode courte pour le générateur de Marx des figures 1 à 3.

La figure 11 illustre un perfectionnement supplémentaire.

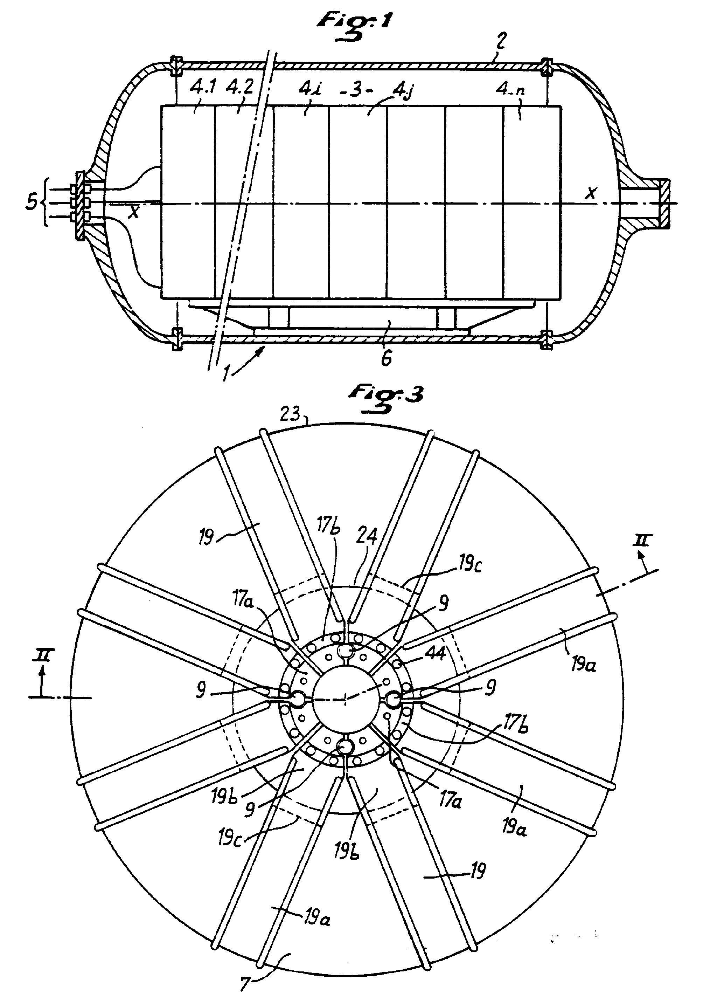

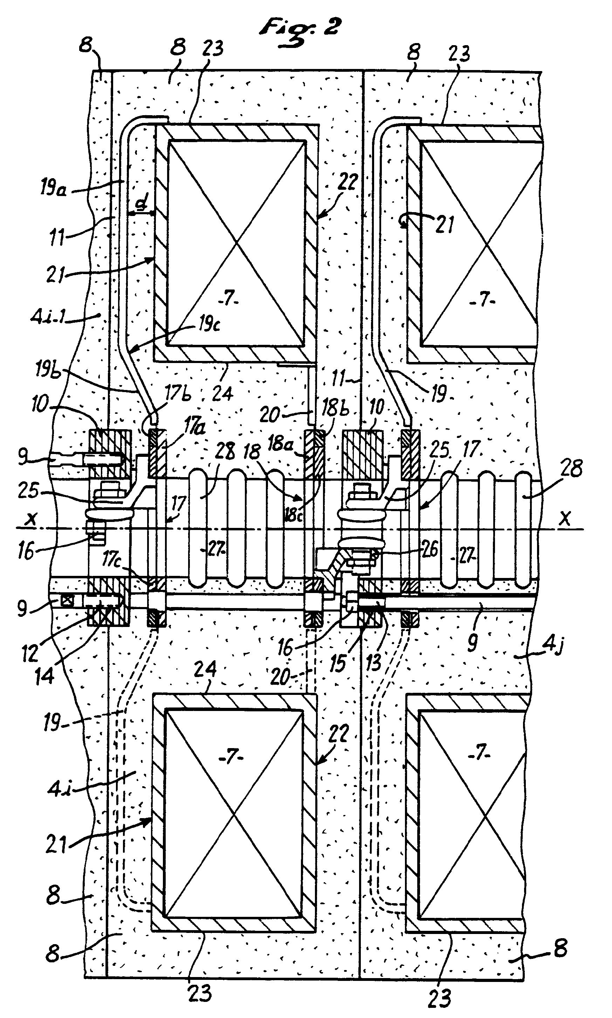

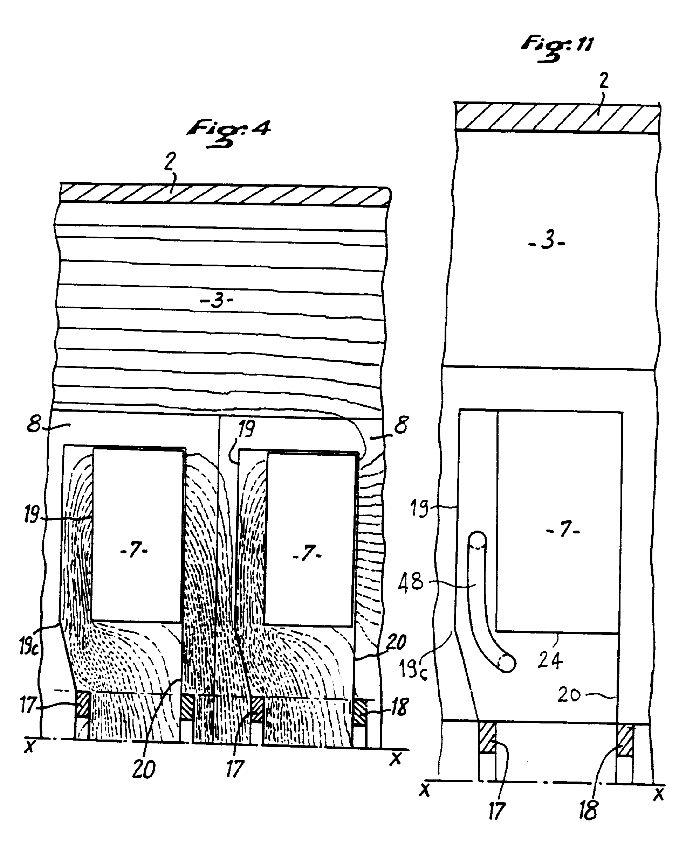

Le générateur de Marx 1, montré schématiquement sur la figure 1, comporte une enveloppe étanche 2, délimitant une enceinte 3, à l'intérieur de laquelle règne une ambiance d'un gaz diélectrique, par exemple de l'hexafluorure de soufre SF6. Dans l'enceinte 3, sont agencés une pluralité d'étages de condensateur 4.1, 4.2,...,4.i,4.j,...4.n, qui, comme on peut mieux le voir sur les figures 2 et 3, présentent chacun la forme d'une couronne - ou tore-à section rectangulaire. Ces étages de condensateur sont tous montés coaxialement à un axe X-X et sont juxtaposés le long dudit axe. De façon connue et non représentée, lesdits étages de condensateurs sont électriquement connectés les uns aux autres, notamment par l'intermédiaire de résistances non représentées, pour pouvoir être chargés en parallèle, puis déchargés en série. De plus, des connexions électriques 5 relient lesdits étages de condensateur à des dispositifs électriques de commande, non représentés, extérieurs à l'enveloppe 2.

Par ailleurs, comme cela apparaîtra mieux de la suite de la description, les étages de condensateurs 4.1 à 4.n, sont mécaniquement solidaires les uns des autres et leur ensemble est mécaniquement porté par un support ou plusieurs supports 6, les liant à l'enveloppe 2. Par exemple, l'axe commun X-X est horizontal et le support 6 forme un socle, qui supporte lesdits étages de condensateurs et qui est lui-même supporté par ladite enveloppe 2.

Sur la figure 2, on a représenté, schématiquement en coupe axiale, l'un quelconque 4.i desdits étages de condensateurs, ainsi que, partiellement, les étages de condensateur 4.i-1 et 4.j, qui sont respectivement disposés de part et d'autre dudit étage 4.i.

Comme on peut le voir, chaque étage de condensateur comporte un condensateur 7 en forme de couronne, centré sur l'axe X-X et noyé dans un enrobage de résine diélectrique 8.

Les enrobages 8 présentent eux-mêmes la forme d'une couronne coaxiale à l'axe X-X et comportent des faces d'extrémité 11, par lesquelles ils peuvent s'appuyer les uns contre les autres.

Les étages de condensateur consécutifs sont mécaniquement liés les uns aux autres grâce à des tirants de solidarisation 9, prenant appui sur des bagues de centrage 10. Chaque bague de centrage 10 s'ajuste dans des évidements centraux en regard prévus dans les faces d'extrémité et d'appui 11 des enrobages consécutifs 8. Chaque tirant 9 est pourvu à chacune de ses extrémités de filetages 12 et 13, qui, soit se vissent dans des taraudages 14 desdites bagues 10, soit traversent librement des alésages 15 de celles-ci. Sur les filetages 13 se vissent des écrous de pression 16. Chaque bague 10 comporte des taraudages 14 et des alèsages 15.

Sur la figure 2, on n'a pas représenté les liaisons électriques entre les étages de condensateur consécutifs. En revanche, on a représenté les bornes 17 et 18 de chaque étage de condensateur et les électrodes 19 et 20 correspondantes. De façon connue, les électrodes 19 et 20 sont constituées de bandes métalliques minces (par exemple quelques dixièmes de mm), généralement désignées sous le nom de clinquant.

Chaque borne 17 et 18 présente une forme annulaire et est disposée au voisinage de l'axe X-X, auquel elle est coaxiale. De plus, lesdites bornes 17 et 18 se trouvent chacune, respectivement et au moins approximativement, dans le plan des faces d'extrémité 21 ou 22 des condensateurs 7.

Ainsi, l'encombrement axial de chaque étage peut être minimum.

La borne annulaire 17 de chaque étage est reliée, par une pluralité d'électrodes 19 radiales (voir la figure 3 sur laquelle on a supposé que l'enrobage 8 était éliminé), à la périphérie externe 23 du condensateur 7 correspondant. Les électrodes 19 sont donc longues. Elles comportent une partie plane allongée 19a, parallèle à la face d'extrémité 21 correspondante du condensateur 7 associé et écartée de celle-ci d'une distance d. Toutefois, pour rejoindre la borne annulaire 17, elle doit comporter de plus une partie centrale inclinée 19b, reliée à la partie plane 19a par un coude 19c, se trouvant au voisinage de la périphérie interne 24 dudit condensateur 7.

Par ailleurs, la borne annulaire 18 de chaque étage de condensateur est reliée, par une pluralité d'électrodes radiales 20 (dont la disposition en étoile n'est pas représentée mais est avantageusement semblable à celle des électrodes 19, telle que montrée sur la figure 3), à la périphérie interne 24 du condensateur 7 correspondant. Les électrodes 20 sont donc plus courtes que les électrodes 19. De plus, puisqu'elles sont logées à l'intérieur de ladite périphérie interne 24, elles peuvent être rectilignes sur toute leur longueur.

Le plan des portions 19a des électrodes 19 et le plan des électrodes 20 sont orthogonaux à l'axe X-X. A titre d'exemple, ces électrodes peuvent être réalisés dans des bandes métalliques de 4 à 5 dixièmes de mm d'épaisseur et de 50 mm de largeur. La longueur des portions 19a des électrodes 19 peut être de l'ordre de 150 mm.

Les bornes 17 et 18 sont respectivement solidaires d'éclateurs 25 ou 26, logés dans l'évidement central 27 des étages de condensateur et disposés de façon que l'éclateur 25 d'un étage puisse coopérer avec l'éclateur 26 de l'étage suivant.

Des gorges 28 peuvent être pratiquées dans la paroi dudit évidement central 27 afin d'éliminer la conduction électrique par effet de peau.

De la description qui précède, il résulte clairement que, pour chaque condensateur 7, la tension est appliquée et recueillie entre les périphéries externe 23 et interne 24 dudit condensateur et qu'afin d'occuper l'encombrement axial le plus faible possible, il est nécessaire que la distance d soit juste suffisante pour éviter les claquages entre les électrodes 19 et les condensateurs 7 et que les bornes 17 soient rapprochées du centre desdits condensateurs 7, afin de permettre de disposer les éclateurs 25 d'un étage en regard des éclateurs 26 d'un étage voisin. Il en résulte que, entre le coude 19c d'une électrode 19 et la périphérie interne 24 le champ électrique est très élevé, puisque cette électrode 19 et cette périphérie interne 24 sont portées à des potentiels élevés et opposés. A titre d'exemple, la différence de potentiel entre l'électrode 19 et la périphérie interne 24 (c'est-à-dire la différence de potentiel entre les électrodes 19 et 20), peut être de l'ordre de 100 kV pendant la charge des condensateurs. Aussi, il existe des risques de claquage au niveau desdits coudes 19c. Sur la figure 4, on a représenté schématiquement les lignes de champ électrique pendant la charge des condensateurs 7. On voit qu'une forte densité de lignes de champ existe entre les coudes 19c et les condensateurs 7 pendant la charge de ceux-ci.

Les risques de claquage au niveau desdits coudes sont encore accrus du fait que, afin de diminuer l'inductance desdits étages de condensateurs on prévoit un grand nombre d'électrodes 19 par étage (huit dans l'exemple représenté) et du fait que, de par leur structure à faible épaisseur, à grande largeur et à grande longueur, les électrodes 19 ne présentent pas une résistance mécanique suffisante pour ne pas se déformer au moment du moulage des enrobages 8. A cause de cette faible résistance mécanique des électrodes 19, la distance d risque donc d'être inférieure en réalité à la valeur calculée pour éviter les claquages.

Pour remédier à ces inconvénients, selon l'invention, les bords longitudinaux des électrodes 19 et 20 sont arrondis en regard du condensateur 7 correspondant. On augmente ainsi la résistance au claquage entre les électrodes et les condensateurs, puisque lesdits bords longitudinaux ne présentent aucune arête vive en regard desdits condensateurs.

Les figures 5a à 5g montrent plusieurs exemples de sections conformes à l'invention pour les électrodes 19 et 20. Sur chacune des figures, le condensateur 7 (non représenté) serait disposé sous l'électrode 19 ou 20 correspondante.

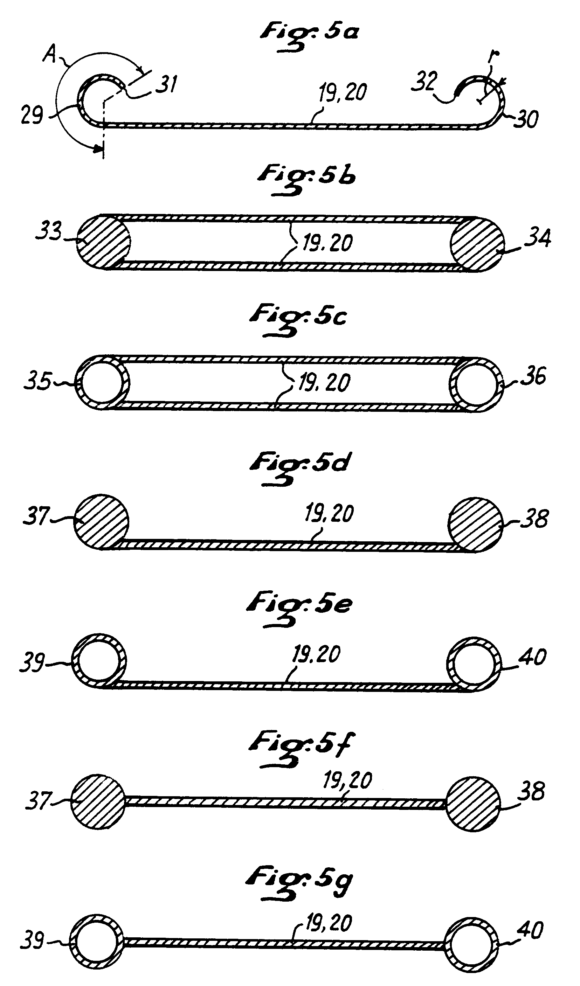

Sur la figure 5a, les bords longitudinaux des électrodes 19 et 20 sont simplement recourbés du côté opposé au condensateur 7 correspondant, pour former des boudins cylindriques 29 et 30. Dans ce cas, il est avantageux que l'angle de recourbement A soit au moins égal à 180°, et de préférence de l'ordre de 225°, afin que les arêtes d'extrémités 31 ou 32 desdits boudins soient parfaitement isolées du condensateur 7 par l'électrode 19 ou 20, respectivement. A titre d'exemple, pour une épaisseur de 0,4 mm du clinquant constituant lesdites électrodes, il est avantageux que le rayon r desdits boudins cylindriques soit de l'ordre de 2,5 mm. Sur les figures 5b et 5c, chaque électrode 19 et 20 est constituée de deux bandes de clinquant parallèle, solidaires le long de leurs bords longitudinaux, par exemple par soudure, de tiges rondes 33 et 34 (figure 5b) ou de tubes 35 et 36 (figure 5c).

Sur les figures 5d et 5e, chaque électrode 19 et 20 est constituée d'une seule bande de clinquant, solidaire le long de ses bords longitudinaux, par exemple par soudure, de tiges rondes 37 et 38 (figure 5d) ou de tubes 39 et 40 (figure 5e), lesdites bandes de clinquant étant déportées par rapport aux centres desdites tiges et tubes. Les figures 5f et 5g montrent deux variantes de réalisation, correspondant respectivement à celles des figures 5d et 5e, les bandes de cliquant étant alors disposées diamétralement par rapport auxdits tiges et tubes.

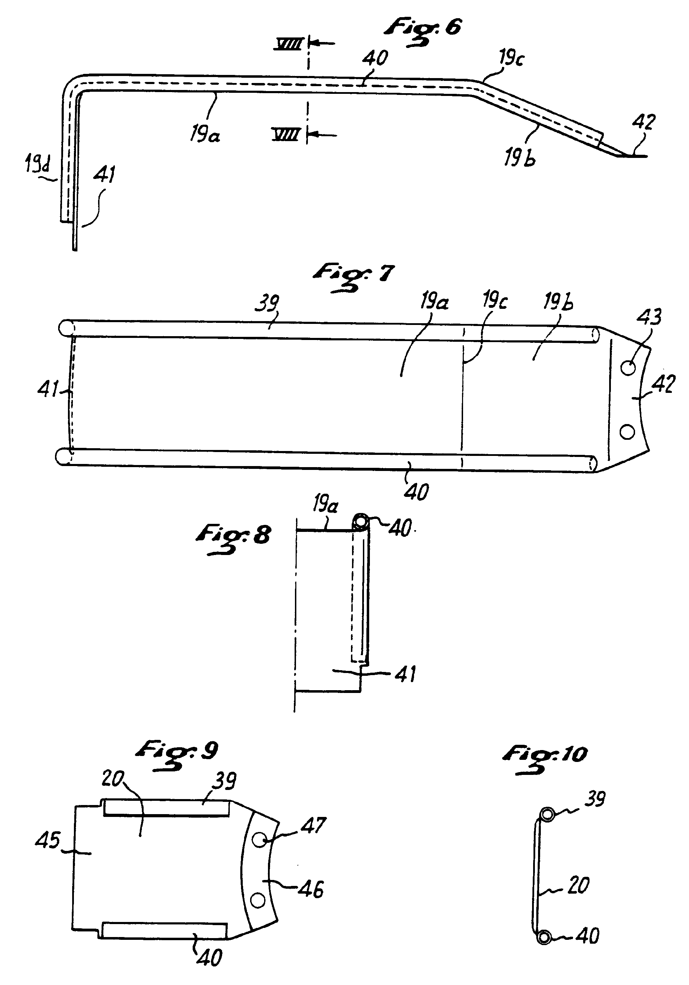

Les figures 6 à 10 illustrent la réalisation des électrodes 19 et 20 montrées par les figures 2 et 3 en conformité avec le mode de réalisation de la figure 5e.

Chaque électrode 19 (voir les figures 6 à 8) est bordée, du côté opposé au condensateur 7 correspondant, de deux tubes latéraux 39 et 40, soudés à ladite électrode. En plus des portions 19a, 19b et 19c décrites précédemment, une électrode 19 comporte une portion de retour 19d, qui est sensiblement parallèle à l'axe X-X, pour sa liaison à la périphérie externe 23 du condensateur 7.

A cet effet, la bande de clinquant constituant l'électrode 19 comporte un prolongement 41 pour la fixation à ladite périphérie, par exemple par soudure.

De même, la bande de clinquant de la partie coudée 19b d'une électrode 19 comporte un prolongement 42, pour la fixation à une borne 17. Cette dernière peut à cet effet être constituée d'un anneau 17a et de secteurs 17b pressant entre eux lesdits prolongements 42, qui sont pourvus de trous 43 pour le passage de vis à écrous 44, destinées à presser lesdits prolongements entre ledit anneau 17a et un desdits secteurs 17b. Les éclateurs 25 sont alors portés par un anneau 17c, intérieur aux secteurs 17b et en liaison mécanique et électrique avec le reste (17a,17b) des bornes 17 respectives. Les tubes 39 et 40 et la bande de clinquant constituant chaque électrode 19 sont formés séparément à la forme de celle-ci, puis assemblés par soudure.

De même, chaque électrode 20 (voir les figures 9 et 10) est bordée de tubes latéraux 39 et 40 soudés. Le clinquant d'une électrode 20 comporte des prolongements 45 et 46, respectivement pour la fixation et la connexion électrique à la périphérie interne 24 du condensateur 7 correspondant et à une borne 18. Les prolongements 46 sont percés de trous 47 et les bornes 18 comportent une structure (semblable à celle des bornes 17) composée d'un anneau 18a et de secteurs de pression 18b. Ainsi, lesdits prolongements 46 peuvent-ils être pressés entre un anneau 18a et un secteur 18b, par l'intermédiaire de vis à écrou, non représentées. Les éclateurs 26 sont solidaires d'un anneau 18c, intérieur aux secteurs 18b et en liaison mécanique et électrique avec les autres constituants (18a,18b) des bornes 18 respectives. Là encore, les tubes 39 et 40 et la bande de clinquant constituant chaque électrode 20 sont formés séparément, puis assemblés par soudure.

Pour diminuer encore les risques de claquage entre une électrode 19 et la périphérie interne 24 du condensateur 7 correspondant, on peut disposer entre ladite électrode et ladite périphérie interne, un dispositif 48 de répartition de champ électrique (voir la figure schématique 11). Un tel dispositif peut être constitué par un anneau conducteur, courbé pour suivre au moins approximativement la forme courbée de ladite électrode 19.

## Revendications

1. Dispositif de stockage d'énergie électrique à très haute tension, du type comportant une pluralité d'étages de condensateur (4.1 à 4.n), chacun en forme de couronne, électriquement connectés les uns aux autres pour pouvoir être chargés en parallèle et déchargés en série, dispositif dans lequel la tension de charge est appliquée entre les périphéries externe (23) et interne (24) du condensateur (7) de chaque étage, lesdites couronnes étant coaxiales et réparties le long de leur axe commun (X-X), tandis que chaque étage de condensateur comporte des bornes (17,18) disposées centralement au voisinage dudit axe commun (X-X) et, du côté de chacune des faces d'extrémité (21,22) du condensateur (7), au moins une électrode longue (19) et au moins une électrode courte (20) reliant respectivement lesdites périphéries externe et interne à la borne (17,18) correspondante, de sorte que chaque électrode a une direction générale radiale par rapport à la couronne correspondante, lesdites électrodes (19,20), extérieures auxdits condensateurs (7), étant constituées chacune d'une bande métallique mince dont le plan est de direction générale perpendiculaire audit axe commun (X-X) et parallèle auxdites faces d'extrémité (21,22) desdites couronnes, les bords longitudinaux desdites électrodes longues (19) étant arrondis en regard des faces d'extrémité correspondantes (21) des condensateurs (7), ainsi qu'au voisinage de la périphérie interne (24) de ceux-ci.

2. Dispositif de stockage d'énergie électrique selon la revendication 1,
caractérisé en ce que chacune desdites électrodes longues et courtes (19,20) est pourvue de tels bords longitudinaux arrondis sur la plus grande partie de sa longueur.

3. Dispositif de stockage d'énergie électrique selon l'une des revendications 1 ou 2,
caractérisé en ce que lesdits bords longitudinaux arrondis desdites électrodes sont obtenus par recourbement (29,30) des portions longitudinales de ladite électrode.

4. Dispositif de stockage d'énergie électrique selon la revendication 3,
caractérisé en ce que ledit recourbement (29,30) est cylindrique et s'étend sur une amplitude angulaire (A) d'au moins 180°, et de préférence de 225°.

5. Dispositif de stockage d'énergie électrique selon la revendication 4, dans lequel lesdites électrodes sont réalisées dans une bande métallique de 0,4 à 0,5 mm d'épaisseur et destinées à être portées à un potentiel de l'ordre de 50 kV,
caractérisé en ce que la rayon de recourbement (r) est de l'ordre de 2,5 mm.

6. Dispositif de stockage d'énergie électrique selon l'une des revendications 1 ou 2,
caractérisé en ce que lesdits bords longitudinaux arrondis desdites électrodes sont formés par des tiges rondes (33,34,37,38) ou tubulaires (35,36,39,40).

7. Dispositif de stockage d'énergie électrique selon la revendication 6,
caractérisé en ce que ladite bande métallique mince des électrodes est diamétrale par rapport auxdites tiges (37-40).

8. Dispositif de stockage d'énergie électrique selon la revendication 6,
caractérisé en ce que ladite bande métallique mince des électrodes est excentrée par rapport au plan diamétral desdites tiges (37-40).

9. Dispositif de stockage d'énergie électrique selon l'une des revendications 6 à 8,
caractérisé en ce que chaque électrode est constituée de deux bandes métalliques minces parallèles, solidarisées par l'intermédiaire desdites tiges (33-36).

10. Dispositif de stockage d'énergie électrique selon l'une quelconque des revendications 1 ou 2,
caractérisé en ce que chaque électrode comporte, à chacune de ses extrémités, un prolongement sans bords longitudinaux arrondis (41,42,45,46), en vue de sa connexion, d'une part à l'une desdites bornes et, d'autre part, à l'une des périphéries interne ou externe dudit condensateur.

## Patentansprüche

1. Vorrichtung zur Speicherung elektrischer Energie mit Höchstspannung derart, daß sie eine Vielzahl jeweils kranzförmiger Kondensatorstufen (4.1 bis 4.n) umfaßt, die elektrisch zusammengeschaltet sind, so daß sie parallel aufgeladen und in Reihe entladen werden können, und deren Ladespannung zwischen dem Außenumfang (23) und dem Innenumfang (24) des Kondensators (7) jeder Stufe angelegt wird, wobei die Kränze koaxial und längs ihrer gemeinsamen Achse (X-X) verteilt sind, während jede Kondensatorstufe zentral in der Nähe der gemeinsamen Achse (X-X) Klemmen (17,18) und auf der Seite jeder der Endflächen (21,22) des Kondensators (7) mindestens eine Langelektrode (19) und mindestens eine Kurzelektrode (20) hat, durch die der Außen- bzw. Innenumfang mit der entsprechenden Klemme (17,18) verbunden werden, so daß jede Elektrode gegenüber dem entsprechenden Kranz eine allgemeine radiale Richtung hat, wobei die Elektroden (19,20) außerhalb der Kondensatoren (7) jeweils aus einem dünnen Metallstreifen bestehen, dessen Ebene generell senkrecht zur gemeinsamen Achse (X-X) und parallel zu den Endflächen (21,22) der Kränze verläuft, wobei die Längsränder der Langelektroden (19) gegenüber den entsprechenden Endflächen (21) der Kondensatoren (7) sowie in der Nähe des Innenumfangs (24) derselben abgerundet sind.

2. Vorrichtung zur Speicherung elektrischer Energie nach Anspruch 1,
dadurch gekennzeichnet, daß jede der Lang- und Kurzelektroden (19,20) über den größten Teil ihrer Länge mit solchen abgerundeten Längsrändern versehen ist.

3. Vorrichtung zur Speicherung elektrischer Energie nach einem der Ansprüche 1 oder 2,
dadurch gekennzeichnet, daß die abgerundeten Längsränder der Elektroden durch Umbiegen (29,30) der Längsabschnitte der Elektrode erzielt werden.

4. Vorrichtung zur Speicherung elektrischer Energie nach Anspruch 3,
dadurch gekennzeichnet, daß die Umbiegung (29,30) zylindrisch ist und sich über einen Winkelwert (A) von mindestens 180° und vorzugsweise von 225° erstreckt.

5. Vorrichtung zur Speicherung elektrischer Energie nach Anspruch 4, deren Elektroden aus einem Metallstreifen von 0,4 bis 0,5 mm Dicke hergestellt und für ein Potential in der Größenordnung von 50 kV bestimmt sind,
dadurch gekennzeichnet, daß der Biegeradius (r) eine Größenordnung von 2,5 mm hat.

6. Vorrichtung zur Speicherung elektrischer Energie nach einem der Ansprüche 1 oder 2,
dadurch gekennzeichnet, daß die abgerundeten Längsränder der Elektroden aus Rundstäben (33,34,37,38) oder röhrenförmigen Stäben (35,36,39,40) gebildet werden.

7. Vorrichtung zur Speicherung elektrischer Energie nach Anspruch 6,
dadurch gekennzeichnet, daß der dünne Metallstreifen der Elektroden diametral zu den Stäben (37-40) verläuft.

8. Vorrichtung zur Speicherung elektrischer Energie nach Anspruch 6,
dadurch gekennzeichnet, daß der dünne Metallstreifen der Elektroden zur diametralen Ebene der Stäbe (37-40) exzentrisch ist.

9. Vorrichtung zur Speicherung elektrischer Energie nach einem der Ansprüche 6 bis 8,
dadurch gekennzeichnet, daß jede Elektrode aus zwei dünnen parallelen Metallstreifen besteht, die durch Stäbe (33-36) verbunden sind.

10. Vorrichtung zur Speicherung elektrischer Energie nach einem der Ansprüche 1 oder 2,
dadurch gekennzeichnet, daß jede Elektrode an jedem ihrer Enden eine Verlängerung ohne abgerundete Längsränder (41,42,45,46) zum Anschluß einerseits an eine der Klemmen und andererseits an den Innen- oder Außenumfang des Kondensators hat.

## Claims

1. Device for storing very high voltage electrical energy, of the type including a plurality of capacitor stages (4.1 to 4.n), each in the form of a ring, electrically connected up to each other in order to be able to be charged in parallel and discharged in series, in which device the charging voltage is applied between the external (23) and internal (24) peripheries of the capacitor (7) of each stage, the said rings being coaxial and distributed along their common axis (X-X), whereas each capacitor stage includes terminals (17, 18) arranged centrally in the vicinity of the said common axis (X-X) and, on the side of each of the end faces (21, 22) of the capacitor (7), at least one long electrode (19) and at least one short electrode (20) connecting respectively the said external and internal peripheries to the corresponding terminal (17, 18), so that each electrode has a general direction which is radial with respect to the corresponding ring, the said electrodes (19, 20), outside the said capacitors (7), each consisting of a thin metal strip, the plane of which has a general direction perpendicular to the said common axis (X-X) and parallel to the said end faces (21, 22) of the said rings, the longitudinal edges of the said long electrodes (19) being rounded facing the corresponding end faces (21) of the capacitors (7), as well as in the vicinity of the internal periphery (24) of the latter.

2. Electrical energy storage device according to Claim 1, characterized in that each of the said long and short electrodes (19, 20) is provided with such rounded longitudinal edges over the greater part of its length.

3. Electrical energy storage device according to one of Claims 1 or 2, characterized in that the said rounded longitudinal edges of the said electrodes are obtained by curl-over (29, 30) of the longitudinal portions of the said electrode.

4. Electrical energy storage device according to Claim 3, characterized in that the said curl-over (29, 30) is cylindrical and extends over an angular amplitude (A) of at least 180°, and preferably of 225°.

5. Electrical energy storage device according to Claim 4, in which the said electrodes are produced in a metal strip of 0.4 to 0.5 mm thickness and intended to be raised to a potential of the order of 50 kV, characterized in that the curl-over radius (r) is of the order of 2.5 mm.

6. Electrical energy storage device according to one of Claims 1 or 2, characterized in that the said rounded longitudinal edges of the said electrodes are formed by rounded rods (33, 34, 37, 38) or tubular rods (35, 36, 39, 40).

7. Electrical energy storage device according to Claim 6, characterized in that the said thin metal strip of the electrodes is diametral with respect to the said rods (37-40).

8. Electrical energy storage device according to Claim 6, characterized in that the said thin metal strip of the electrodes is off-centre with respect to the diametral plane of the said rods (37-40).

9. Electrical energy storage device according to one of Claims 6 to 8, characterized in that each electrode consists of two parallel thin metal strips rigidly fastened by means of the said rods (33-36).

10. Electrical energy storage device according to either of Claims 1 or 2, characterized in that each electrode includes, at each of its ends, a prolongation without rounded longitudinal edges (41, 42, 45, 46), with a view to connecting it, on the one hand, to one of the said terminals and, on the other hand, to one of the internal or external peripheries of the said capacitor.
